Europäisches Patentamt

European Patent Office

Office européen des brevets

(19)

(11) EP 0 603 088 B1

(12) **FASCICULE DE BREVET EUROPEEN**

(45) Date de publication et mention
de la délivrance du brevet:
**13.11.1996 Bulletin 1996/46**

(51) Int Cl.6: **H02H 3/34**

(21) Numéro de dépôt: **93420492.6**

(22) Date de dépôt: **10.12.1993**

(54) **Dispositif de calcul numérique d'une composante symétrique d'une grandeur électrique d'un réseau triphasé et relais le comportant**

Vorrichtung zur numerischen Berechnung einer symmetrischen Komponente einer elektrischen Grösse eines Dreiphasennetzes und damit versehenes Relais

Device for numerical calculation of a symmetrical component of an electric quantity in a three-phase network and relay comprising the same

(84) Etats contractants désignés:
**DE ES GB IT**

(30) Priorité: **17.12.1992 FR 9215355**

(43) Date de publication de la demande:
**22.06.1994 Bulletin 1994/25**

(73) Titulaire: **SCHNEIDER ELECTRIC SA**
**92100 Boulogne-Billancourt (FR)**

(72) Inventeur: **Martin, Eric**
**F-38050 Grenoble Cedex 09 (FR)**

(74) Mandataire: **Jouvray, Marie-Andrée et al**
**Schneider Electric SA,**
**Sce. Propriété Industrielle**
**38050 Grenoble Cédex 09 (FR)**

(56) Documents cités:
**FR-A- 2 650 711**

• **PATENT ABSTRACTS OF JAPAN vol. 017, no. 149 (P-1509)24 Mars 1993 & JP-A-43 019 671 (HITACHI) 10 Novembre 1992**

**Description**

L'invention concerne un dispositif de calcul numérique d'une composante symétrique d'une grandeur électrique, courant ou tension, d'un réseau triphasé, comportant des moyens de mesure de ladite grandeur dans au moins deux phases du réseau, des moyens d'échantillonnage et de conversion analogique-numérique connectés à la sortie des moyens de mesure, et des moyens de détermination de ladite composante symétrique connectés à la sortie des moyens de conversion.

On sait qu'un système triphasé déséquilibré de grandeurs sinusoïdales, tensions ou courants, peut être considéré comme étant la superposition de trois systèmes équilibrés symétriques pouvant respectivement être représentés par les composantes directe, inverse et homopolaire de la grandeur considérée. Certains relais de protection, connectés à un réseau électrique triphasé, prennent en compte certaines des composantes symétriques des tensions ou des courants du réseau, notamment la tension ou le courant inverse.

Dans les dispositifs connus, les valeurs représentatives de la composante inverse sont généralement calculées de manière analogique. Dans la demande de brevet FR-2.650.711, un disjoncteur shunt comporte un microprocesseur élaborant la composante inverse de tension à partir d'échantillons de tension déphasés mesurés à un instant prédéterminé sur une première phase du réseau et respectivement 13,3ms et 6,6ms plus tard sur les deux autres phases du réseau, dans le cas d'un réseau de fréquence 50Hz. Cette méthode a pour inconvénient de donner une valeur de tension inverse erronée si les modules des tensions phase varient en module, et en phase pendant le temps nécessaire au calcul.

L'invention a pour but de fournir un dispositif de calcul numérique d'une composante symétrique d'une grandeur électrique d'un réseau triphasé ne présentant pas les inconvénients des dispositifs connus.

Selon l'invention, ce but est atteint par le fait que lesdits moyens de détermination comportent des moyens de filtrage numérique calculant, pour chacune desdites phases, à partir d'une pluralité d'échantillons numériques représentatifs de ladite grandeur sur ladite phase pendant une période du réseau, deux composantes déphasées entre elles de 90° et représentatives de ladite grandeur, et des moyens de calcul matriciel, comportant au moins une matrice de rotation à deux dimensions et connectés aux moyens de filtrage numérique.

L'invention concerne également un relais de protection comportant un tel dispositif de calcul.

D'autres avantages et caractéristiques ressortiront plus clairement de la description qui va suivre, d'un mode de réalisation particulier de l'invention, donné à titre d'exemple non limitatif et représenté aux dessins annexés sur lesquels:

La figure 1 illustre, sous forme de schéma-bloc, un relais numérique dans lequel l'invention peut être mise en oeuvre.

La figure 2 représente plus en détail les fonctions réalisées par le microprocesseur du relais de la figure 1.

On sait que la composante inverse de courant Ii peut être obtenue à partir des 3 vecteurs I1, I2, I3 représentatifs des trois courants phases d'un réseau triphasé par l'équation :

$$Ii = (I1 + a^2 \, I2 + aI3)/3 \tag{Eq.1}$$

dans laquelle a est un opérateur de rotation défini par :

$$a = \exp j \, 2\pi/3 \tag{Eq.2}$$

Les courants Ii, I1, I2 et I3 sont calculés sur une période du réseau et sont représentatifs des courants correspondants à un instant prédéterminé. Les valeurs I1,I2 ou I3 des courants phases sont obtenues à partir d'une pluralité d'échantillons successifs, respectivement ie1, ie2 ou ie3, obtenus à partir de la mesure du courant i1, i2 ou i3 correspondant pendant une période. Les échantillons ie représentatifs d'un courant I à déterminer sont appliqués à l'entrée de deux filtres numériques non récursifs à réponse impulsionnelle finie dont les coefficients sont déterminés de manière à fournir, sur une période, deux composantes X et Y déphasées entre elles de 90°. Le courant I peut ainsi être représenté par ses deux composantes X et Y, telles que :

$$I^2 = X^2 + Y^2 \tag{Eq.3}$$

L'utilisation de filtres numériques tenant compte des échantillons obtenus sur un intervalle d'observation dont la durée correspond à une période du réseau permet de s'affranchir des harmoniques.

Le calcul des composantes peut être effectué à chaque période d'échantillonnage, les nouvelles valeurs des composantes X et Y étant représentatives du courant pendant la période du réseau écoulée. Pour limiter le temps de calcul nécessaire, il est possible de ne pas calculer une nouvelle valeur des composantes X et Y à chaque nouvel échantillon, mais après un nombre prédéterminé d'échantillons. A titre d'exemple, dans un mode de réalisation préférentiel, les courants sont échantillonnés 12 fois par période et le calcul des composantes X et Y est effectué tous les 4 échantillons, en tenant compte des 12 derniers échantillons. Ceci permet d'obtenir un compromis acceptable entre la précision et la puissance de calcul nécessaire, c'est à dire la rapidité du traitement.

Les composantes X1, Y1, X2, Y2 et X3, Y3 ayant été calculées, l'équation Eq.1 peut être utilisée pour calculer, sous forme matricielle, les composantes Xi et Yi du courant inverse Ii ; selon l'équation Eq. 4 suivante :

$$3\begin{bmatrix} Xi \\ Yi \end{bmatrix} = \begin{bmatrix} X1 \\ Y1 \end{bmatrix} + \begin{bmatrix} \cos(4\pi/3) & -\sin(4\pi/3) \\ \sin(4\pi/3) & \cos(4\pi/3) \end{bmatrix} \begin{bmatrix} X2 \\ Y2 \end{bmatrix} + \begin{bmatrix} \cos(2\pi/3) & -\sin(2\pi/3) \\ \sin(2\pi/3) & \cos(2\pi/3) \end{bmatrix} \begin{bmatrix} X3 \\ Y3 \end{bmatrix}$$

Un tel calcul matriciel revient à faire effectuer une rotation matricielle de 240° aux composantes de I2 et une rotation matricielle de 120° aux composantes de I3, puis à faire la somme vectorielle des composantes ainsi obtenues et des composantes de I1. Ii est ensuite calculé à partir de ces composantes Xi et Yi au moyen de l'équation Eq.3.

Selon un mode de réalisation préférentiel, l'équation Eq. 1 est mise sous une forme telle qu'il suffit d'utiliser une seule matrice de rotation à deux dimensions. On sait, en effet, que:

$$a^2 + a + 1 = 0 \tag{Eq.5}$$

L'équation Eq. 1 peut donc s'écrire :

$$3Ii = I1 + a^2 I2 + aI3 \tag{Eq.6}$$

$$3Ii = I1 + a^2 I2 + I3(-1 - a^2) \tag{Eq.7}$$

$$3Ii = I1 - I3 + a^2(I2 - I3) \tag{Eq.8}$$

Le calcul matriciel des composantes Xi et Yi, peut alors s'écrire :

$$3\begin{bmatrix} Xi \\ Yi \end{bmatrix} = \begin{bmatrix} X1-X3 \\ Y1-Y3 \end{bmatrix} + \begin{bmatrix} \cos(4\pi/3) & -\sin(4\pi/3) \\ \sin(4\pi/3) & \cos(4\pi/3) \end{bmatrix} \begin{bmatrix} X2-X3 \\ Y2-Y3 \end{bmatrix} \tag{Eq. 9}$$

Ce calcul est plus rapide car il n'utilise qu'une matrice de rotation à deux dimensions.

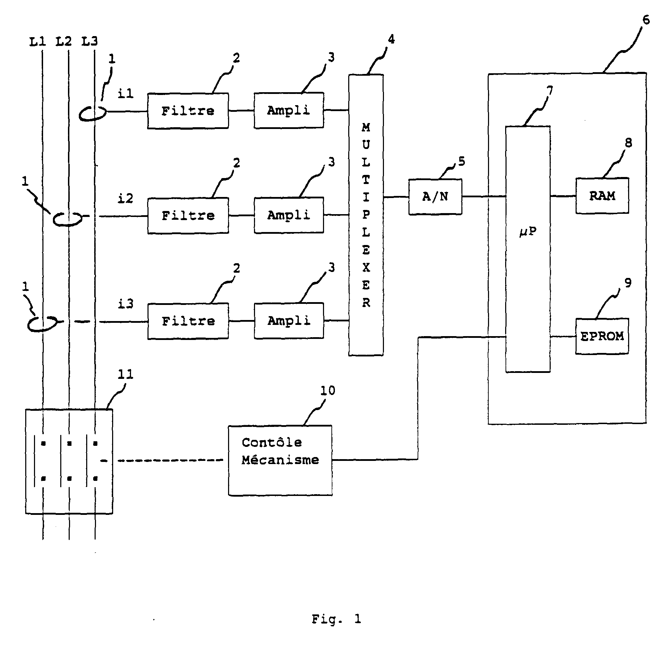

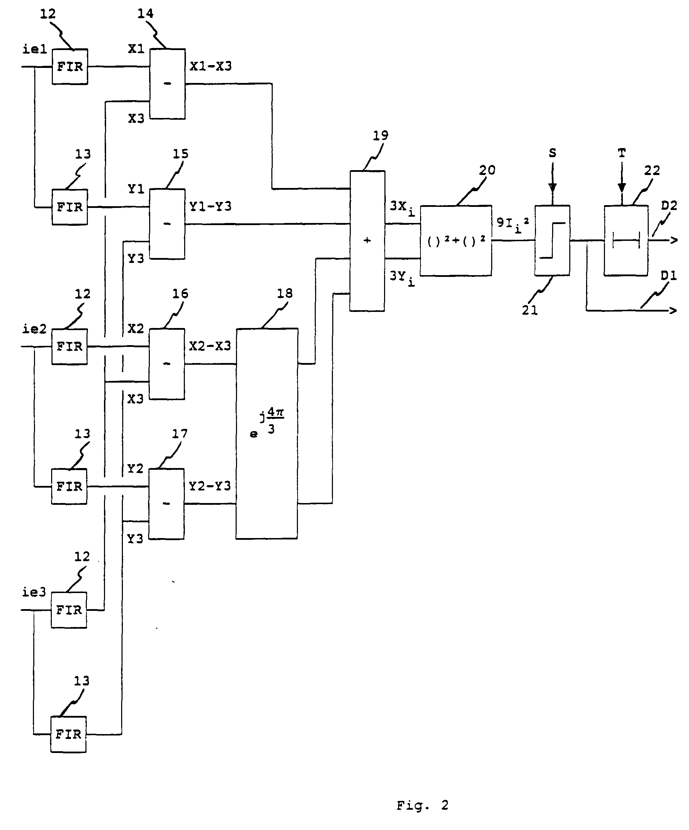

Les figures 1 et 2 illustrent un mode de réalisation particulier d'un relais mettant en oeuvre l'invention.

Sur la figure 1, des capteurs de courant 1 permettent de mesurer les courants i1, i2 et i3 circulant dans des conducteurs de phase L1, L2 et L3 d'un réseau électrique triphasé.

Les signaux de sortie d'un capteur de courant 1 sont appliqués à l'entrée d'un filtre anti-repliement 2 associé puis, après amplification éventuelle dans un amplificateur 3, sont appliqués à l'entrée d'un multiplexeur 4.

La sortie du multiplexeur 4 est connectée à l'entrée d'un circuit 5 d'échantillonnage et de conversion analogique/numérique. Celui-ci applique à l'entrée d'un circuit électronique de traitement 6 des valeurs numériques représentatives d'échantillons successifs ie1, ie2 et ie3 des courants mesurés. Sur la figure 1, seuls les éléments du circuit 6 indispensables à le compréhension ont été représentés, à savoir un microprocesseur 7, connecté à une mémoire vive 8 et à une mémoire morte 9, par exemple de type EPROM.

Le microprocesseur 7 effectue, pour chacun des courants de phase, le filtrage numérique permettant d'obtenir les composantes X et Y correspondantes et en déduit les valeurs correspondantes de Xi et Yi, puis la valeur du courant inverse. Cette valeur est ensuite comparée à un seuil prédéterminé, et si elle dépasse ce seuil le microprocesseur fournit, instantanément ou après temporisation, un signal de déclenchement D à un dispositif 10 de contrôle du mécanisme d'un disjoncteur 11, qui interrompt alors la circulation du courant dans le réseau électrique.

La figure 2 illustre plus en détail les diverses fonctions réalisées par le microprocesseur dans le cas où il utilise l'équation Eq.9.

Le microprocesseur réalise (12, 13) un double filtrage numérique des échantillons associés à chacune des phases, de manière à calculer les valeurs X1, Y1; X2, Y2 et X3, Y3, à partir des échantillons ie1, ie2 et ie3 prélevés sur une période du réseau. Il effectue ensuite les différences X1 - X3 en 14, Y1 - Y3 en 15, X2 - X3 en 16 et Y2 - Y3 en 17. Il fait ensuite subir, en 18, une rotation de 240° aux vecteurs de composantes X2-X3 et Y2-Y3. Puis le microprocesseur effectue en 19, la somme matricielle des valeurs obtenues en sortie de 14, 15 et 18 de manière à obtenir les valeurs 3Xi et 3Yi. Le calcul de Ii se fait par élévation au carré et sommation des valeurs 3Xi et 3Yi précédemment obtenues. La valeur ainsi obtenue, $9Ii^2$ est ensuite, en 21, comparée à un seuil prédéterminé S dont la valeur a préalablement été mise en mémoire dans le circuit de traitement 6. Si la valeur $9Ii^2$, représentative du courant inverse Ii, est supérieure au seuil S, le microprocesseur fournit soit un signal de déclenchement instantané D1 soit, en 22, un signal de déclenchement D2 après une temporisation prédéterminée T, réglable. La temporisation peut être une temporisation à temps constant ou fonction de l'amplitude du courant.

L'invention n'est pas limitée au mode de réalisation représenté ci-dessus. En particulier, elle s'applique non seulement au calcul de la composante inverse mais également au calcul de la composante directe de courant, ou de tension, triphasé. En effet, la composante directe de courant Id est donnée par l'équation :

$$Id = (I1 + aI2 + a^2 I3)/3 \qquad\qquad (Eq.10)$$

Cette équation peut être utilisée telle quelle pour calculer, avec deux matrices de rotation les composantes Xd et Yd du courant direct, à partir des composantes des courants de phase. Elle peut, comme l'équation Eq.1 être simplifiée de manière à ne comporter qu'une seule matrice de rotation.

Dans les variantes décrites ci-dessus, les composantes symétriques sont calculées à partir des mesures de courant ou de tension sur les trois phases du réseau. En l'absence du défaut terre, il est possible de faire le calcul de la composante symétrique à partir de deux phases seulement. En effet, dans ce cas I1 + I2 +I3 = 0 et on peut montrer que l'équation Eq.1 peut s'écrire :

$$exp\ (-j\ \pi/6)\ Ii = (I1 - a^2\ I3)/\sqrt{3} \qquad\qquad (Eq.11)$$

L'équation Eq.11 peut être utilisée par le microprocesseur pour calculer les composantes Xi et Yi de Ii à partir des composantes de I1 et I3, avec une seule matrice de rotation.

Il peut être avantageux d'exprimer sous une autre forme la valeur Ii dans ce cas, de manière à obtenir un traitement du même type que celui réalisé avec trois phases. En effet, l'équation Eq.8 peut, lorsque I1 + I2 + I3 = 0, s'écrire:

$$3Ii = I1 - I3 + a^2\ (-I1 - I3 - I3) \qquad\qquad (Eq.12)$$

$$3Ii = I1 - I3 + a^2\ (-I1 - 2\ I\ 3) \qquad\qquad (Eq.13)$$

$$ou\ 3Ii = I1 - I3 - a^2\ (I1 + 2I3) \qquad\qquad (Eq.14)$$

soit sous forme matricielle

$$3\begin{bmatrix} Xi \\ Yi \end{bmatrix} = \begin{bmatrix} X1\text{-}X3 \\ Y1\text{-}Y3 \end{bmatrix} + \begin{bmatrix} \cos(4\,\pi/3) & -\sin(4\,\pi/3) \\ \sin(4\,\pi/3) & \cos(4\,\pi/3) \end{bmatrix} \begin{bmatrix} -X1\text{-}2X3 \\ -Y1\text{-}2Y3 \end{bmatrix} \qquad \text{(Eq. 15)}$$

Les fonctions à réaliser par le microprocesseur sont alors pratiquement les mêmes que dans le mode de réalisation illustré à la figure 2, seules les fonctions 16 et 17 étant à modifier en conséquence de manière à fournir :
- X1 - 2 X 3 et - Y1 - 2Y3 à l'entrée de la fonction 18.

Le dispositif de calcul décrit ci-dessus peut être appliqué à des réseaux 50 ou 60 Hz, aussi bien en moyenne tension qu'en basse tension. Bien entendu l'intervalle d'observation des filtres numériques doit être adapté à la période du réseau.

Un tel dispositif de calcul est plus particulièrement destiné à être utilisé dans des relais de protection. A titre d'exemple, un tel relais peut être destiné à la protection d'une machine, moteur ou alternateur, contre les déséquilibres éventuels du réseau, les inversions et les coupures de phase. On détecte pour cela la présence significative d'un courant inverse qui échauffe anormalement le rotor de la machine. Le relais calcule la composante inverse li du courant, à partir du courant mesuré dans trois phases (équations Eq.1 ou Eq.8) ou dans deux phases en l'absence de défaut à la terre (équations Eq.11 ou Eq.13 ou Eq.14) et la compare à un seuil prédéterminé. Cette protection a l'avantage d'être sensible au fondamental du signal, ce qui la rend insensible à une éventuelle composante continue ainsi qu'aux harmoniques.

L'utilisation d'une temporisation à temps dépendant permet d'éviter des déclenchements intempestifs qui pourraient être provoqués par des déséquilibres liés aux transformateurs de courant durant les périodes de démarrage ou d'accélération tout en assurant un niveau de protection suffisant.

## Revendications

1. Dispositif de calcul numérique d'une composante symétrique d'une grandeur électrique, courant ou tension, d'un réseau triphasé, comportant des moyens de mesure (1) de ladite grandeur dans au moins deux phases du réseau, des moyens d'échantillonnage et de conversion analogique-numérique (5) connectés à la sortie des moyens de mesure, et des moyens (6) de détermination de ladite composante symétrique connectés à la sortie des moyens de conversion, dispositif caractérisé en ce que lesdits moyens de détermination comportent des moyens (12,13) de filtrage numérique calculant, pour chacune desdites phases, à partir d'une pluralité d'échantillons numériques (ie1, ie2, ie3) représentatifs de ladite grandeur sur ladite phase (L1, L2, L3) pendant une période du réseau, deux composantes (X, Y) déphasées entre elles de 90° et représentatives de ladite grandeur, et des moyens (14 à 19) de calcul matriciel, comportant au moins une matrice de rotation à deux dimensions (18) et connectés aux moyens de filtrage numérique (12, 13).

2. Dispositif selon la revendication 1, caractérisé en ce que les moyens (12, 13) de filtrage numérique comportent deux filtres non récursifs à réponse impulsionnelle finie.

3. Dispositif selon l'une des revendications 1 et 2, caractérisé en ce que la composante symétrique est la composante inverse (Ii) de ladite grandeur.

4. Dispositif selon l'une des revendications 1 et 2, caractérisé en ce que la composante symétrique est la composante directe (Id) de ladite grandeur.

5. dispositif selon la revendication 3, caractérisé en ce que les moyens de détermination (6) calculent les composantes Xi et Yi, déphasées de 90°, de la composante inverse de ladite grandeur, selon l'équation suivante :

$$3\begin{bmatrix} Xi \\ Yi \end{bmatrix} = \begin{bmatrix} X1\text{-}X3 \\ Y1\text{-}Y3 \end{bmatrix} + \begin{bmatrix} \cos(4\,\pi/3) & -\sin(4\,\pi/3) \\ \sin(4\,\pi/3) & \cos(4\,\pi/3) \end{bmatrix} \begin{bmatrix} X2\text{-}X3 \\ Y2\text{-}Y3 \end{bmatrix}$$

dans laquelle X1 et Y1, X2 et Y2, X3 et Y3 sont respectivement les composantes déphasées de 90° de ladite grandeur associées aux trois phases.

6. Dispositif selon la revendication 3, caractérisé en ce que les moyens de détermination (6) calculent les composantes Xi et Yi, déphasées de 90°, de la composante inverse de ladite grandeur, selon l'équation suivante :

$$3 \begin{Bmatrix} Xi \\ Yi \end{Bmatrix} = \begin{Bmatrix} X1\text{-}X3 \\ Y1\text{-}Y3 \end{Bmatrix} + \begin{bmatrix} \cos(4\pi/3) & -\sin(4\pi/3) \\ \sin(4\pi/3) & \cos(4\pi/3) \end{bmatrix} \begin{bmatrix} -X1\text{-}2X3 \\ -Y1\text{-}2Y3 \end{bmatrix}$$

dans laquelle X1, Y1 et X3, Y3 sont respectivement les composantes déphasées de 90° de ladite grandeur associées à une première (L1) et une troisième (L3) phase.

7. Relais de protection comportant un dispositif de calcul d'une composante symétrique d'une grandeur électrique, des moyens (21) de comparaison de ladite grandeur à un seuil prédéterminé (S) et des moyens de production d'un signal de déclenchement (D), avec ou sans temporisation, lorsque ladite grandeur dépasse ledit seuil, relais caractérisé en ce que le dispositif de calcul est un dispositif selon l'une quelconque des revendications précédentes.

**Patentansprüche**

1. Anordnung zur digitalen Berechnung einer symmetrischen Komponente einer elektrischen Strom- oder Spannungsgröße eines Dreiphasennetzes mit Mitteln (1) zur Messung der genannten Größe in mindestens zwei Phasen des Netzes, an den Ausgang der genannten Meßmitteln angeschlossenen Mitteln (5) zur Abtastung und Analog-Digital-Umsetzung und an den Ausgang der Umsetzmittel angeschlossenen Mitteln (6) zur Bestimmung der genannten symmetrischen Komponente, dadurch gekennzeichnet, daß die genannten Bestimmungsmittel Mittel (12, 13) zur Digitalfilterung, welche für jede der genannten Phasen auf der Grundlage mehrerer, die genannte Größe in der genannten Phase (L1, L2, L3) über eine Periodendauer des Netzes abbildender digitaler Abtastwerte (ie1, ie2, ie3) zwei um 90° gegeneinander verschobene und die genannte Größe abbildende Komponenten (X, Y) berechnen, sowie an die Mittel zur Digitalfilterung (12, 13) angeschlossene Mittel (14 bis 19) zur Matrixberechnung mit mindestens einer zweidimensionalen Rotationsmatrix (18) umfassen.

2. Anordnung nach Anspruch 1, dadurch gekennzeichnet, daß die Mittel (12, 13) zur Digitalfilterung zwei nicht rekursive FIR-Filter umfassen.

3. Anordnung nach Anspruch 1 und 2, dadurch gekennzeichnet, daß die symmetrische Komponente die Gegensystem-Komponente (Ii) der genannten Größe darstellt.

4. Anordnung nach Anspruch 1 und 2, dadurch gekennzeichnet, daß die symmetrische Komponente die Mitsystem-Komponente (Id) der genannten Größe darstellt.

5. Anordnung nach Anspruch 3, dadurch gekennzeichnet, daß die Bestimmungsmittel (6) die um 90° gegeneinander verschobenen Komponenten Xi und Yi der genannten Gegensystem-Komponente der genannten Größe mit Hilfe der Gleichung

$$3 \begin{matrix} Xi \\ Yi \end{matrix} = \begin{matrix} X1\text{-}X3 \\ Y1\text{-}Y3 \end{matrix} + \begin{matrix} \cos(4\pi/3) & -\sin(4\pi/3) \\ \sin(4\pi/3) & \cos(4\pi/3) \end{matrix} \begin{matrix} X2\text{-}X3 \\ Y2\text{-}Y3 \end{matrix}$$

berechnen, wobei X1 und Y1, X2 und Y2 sowie X3 und Y3 jeweils die den drei Phasen zugeordneten, um 90° verschobenen Komponenten der genannten Größe darstellen.

**6.** Anordnung nach Anspruch 3, dadurch gekennzeichnet, daß die Bestimmungsmittel (6) die um 90° gegeneinander verschobenen Komponenten Xi und Yi der genannten Gegensystem-Komponente der genannten Größe mit Hilfe der Gleichung

$$
3 \begin{bmatrix} Xi \\ Yi \end{bmatrix} = \begin{bmatrix} X1\text{-}X3 \\ Y1\text{-}Y3 \end{bmatrix} + \begin{bmatrix} \cos(4\,\pi/3) & -\sin(4\,\pi/3) \\ \sin(4\,\pi/3) & \cos(4\,\pi/3) \end{bmatrix} \begin{bmatrix} X1\text{-}2X3 \\ Y1\text{-}2Y3 \end{bmatrix}
$$

berechnen, wobei X1, Y1 und X3, Y3 jeweils die einer ersten Phase (L1) bzw. einer dritten Phase (L3) zugeordneten, um 90° verschobenen Komponenten der genannten Größe darstellen.

**7.** Schutzrelais mit einer Anordnung zur Berechnung einer symmetrischen Komponente einer elektrischen Größe, Mitteln (21) zum Vergleich der genannten Größe mit einem festgelegten Schwellwert (S) sowie Mitteln zur Erzeugung eines verzögerten oder unverzögerten Auslösesignals (D) bei Überschreiten des genannten Schwellwerts durch die genannte Größe, dadurch gekennzeichnet, daß die Berechnungsanordnung eine Anordnung nach irgendeinem der vorhergehenden Ansprüche darstellt.

## Claims

**1.** A device for numerical computation of a symmetrical component of an electrical quantity, current or voltage, of a three-phase power system, comprising means (1) for measuring said quantity in at least two phases of the power system, means for sampling and for analog-to-digital conversion (5) connected to the output of the measuring means, and means for determining (6) said symmetrical component connected to the output of the conversion means, a device characterized in that said determining means comprise digital filtering means (12, 13) computing, for each of said phases, from a plurality of digital samples (ie1, ie2, ie3) representative of said quantity on said phase (L1, L2, L3) during a period of the power system, two components (X, Y) with a phase difference of 90° between them and representative of said quantity, and means (14, 19) for matrix computing, comprising at least one two-dimensional rotation matrix (18) and connected to the digital filtering means (12, 13).

**2.** The device according to claim 1, characterized in that the digital filtering means (12, 13) comprise two non-recursive finite impulse response filters.

**3.** The device according to one of the claims 1 and 2, characterized in that the symmetrical component is the inverse component (Ii) of said quantity.

**4.** The device according to one of the claims 1 and 2, characterized in that the symmetrical component is the direct component (Id) of said quantity.

**5.** The device according to claim 3, characterized in that the means for determining (6) compute the components Xi and Yi, with a phase difference of 90°, of the inverse component of said quantity, according to the following equation :

$$
3 \begin{bmatrix} Xi \\ Yi \end{bmatrix} = \begin{bmatrix} X1\text{-}X3 \\ Y1\text{-}Y3 \end{bmatrix} + \begin{bmatrix} \cos(4\,\Pi/3) & -\sin(4\,\Pi/3) \\ \sin(4\,\Pi/3) & \cos(4\,\Pi/3) \end{bmatrix} \begin{bmatrix} X2\text{-}X3 \\ Y2\text{-}Y3 \end{bmatrix}
$$

in which X1 and Y1, X2 and Y2, X3 and Y3 are respectively the components with a phase difference of 90° of said quantity associated with the three phases.

6. The device according to claim 3, characterized in that the means for determining (6) compute the components Xi and Yi, with a phase difference of 90°, of the inverse component of said quantity, according to the following equation :

$$3 \begin{bmatrix} Xi \\ Yi \end{bmatrix} = \begin{bmatrix} X1\text{-}X3 \\ Y1\text{-}Y3 \end{bmatrix} + \begin{bmatrix} \cos(4\ \Pi/3) & -\sin(4\ \Pi/3) \\ \sin(4\ \Pi/3) & \cos(4\ \Pi/3) \end{bmatrix} \begin{bmatrix} -X1\text{-}2X3 \\ -Y1\text{-}2Y3 \end{bmatrix}$$

in which X1, Y1 and X3, Y3 are respectively the components with a 90° phase difference of said quantity associated with a first (L1) and a third (L3) phase.

7. A protection relay comprising a device for computing a symmetrical component of an electrical quantity, means (21) for comparing said quantity with a preset threshold (S) and means for producing a tripping signal (D), with or without a time delay, when said quantity exceeds said threshold, a relay characterized in that the computing device is a device according to any one of the foregoing claims.

Fig. 1

Fig. 2